# EUROPÄISCHE PATENTSCHRIFT

(11) **EP 1 191 371 B1**
(45) Veröffentlichungstag und Bekanntmachung des Hinweises auf die Patenterteilung: **27.08.2003**
(21) Anmeldenummer: 01116336.7
(22) Anmeldetag: 23.03.1999
(51) Int. Cl.: G02B 6/255

(54) **Verfahren zum Spleissen von Lichtwellenleitern**
METHOD FOR SPLICING OPTICAL WAVEGUIDES
METHODE D'EPISSURER DES GUIDES D'ONDES LUMINEUSES

(30) Priorität: 27.03.1998 DE 19813755
(43) Veröffentlichungstag der Anmeldung: 27.03.2002
(62) Teilanmeldung aus: 99922064.3
(73) Patentinhaber: SIEMENS AKTIENGESELLSCHAFT, 80333 München (DE)
(72) Erfinder: Müssig, Dirk, 81379 München (DE)

(56) Entgegenhaltungen:
- EP-A- 0 864 890
- PATENT ABSTRACTS OF JAPAN vol. 014, no. 179 (P-1034), 10. April 1990 (1990-04-10) & JP 02 028605 A (FURUKAWA ELECTRIC CO LTD:THE), 30. Januar 1990 (1990-01-30)

## Beschreibung

Die Erfindung bezieht sich auf ein Verfahren zum Spleißen von Lichtwellenleitern gemäß dem Oberbegriff des Patentanspruchs 1.

Zum Verbinden der in der optischen Nachrichtentechnik verstärkt eingesetzten Lichtwellenleitern (Glas- oder Polymerfasern) sind zwei Verfahren bekannt: zum einen das Einkleben von Enden der Lichtwellenleiter in konvektionierte und genormte Stecker und zum anderen das Verspleißen von Lichtwellenleitern mit präparierten Endflächen zu einem einzigen Lichtwellenleiter. Beim Verspleißen der Lichtwellenleiter in Spleißvorrichtungen werden zwei Lichtwellenleiter mit präparierter Endfläche auf zwei Haltevorrichtungen befestigt, die dann mit Justiereinrichtungen verfahren werden können, damit die Endflächen gut zueinander justiert werden. Nach der Justage werden die beiden Enden dann im allgemeinen thermisch verschweißt. Das thermische Verschweißen erfolgt dabei über eine Bogenentladung zwischen zwei Elektroden.

Aus US 4 506 947 ist ein Verfahren bekannt, bei dem über eine Videokamera die Justage von zwei Glasfasern zueinander kontrolliert wird, indem die Spleißstelle mit ultraviolettem Licht beleuchtet wird, so daß der mit Germanium dotierte Kern der Glasfasern Licht im sichtbaren Wellenlängenbereich emittiert. Das Licht wird über die Videokamera und eine nachgeschaltete Bildauswerteeinheit auf einem Monitor dargestellt. Der Bediener der Vorrichtung kann daher die Kerne der beiden Glasfasern über die Monitoreinrichtung und die Justiereinrichtung zueinander justieren. Die Qualität des Spleißvorgangs wird nicht beobachtet.

Die Qualität eines Spleißes zur Erzielung möglichst geringer optischer Verluste bei der Lichtübertragung von einem in den anderen Lichtwellenleiter, ist wesentlich von den in der Spleißvorrichtung eingestellten Parametern abhängig. Zu diesen Parametern gehört auch der Entladungsstrom, mit dem die Lichtwellenleiter verschweißt werden. Bei optimaler Justage und gleichbleibenden Umweltbedingungen (Luftdruck, Luftfeuchte, Temperatur) erreicht man mit einem konstanten Entladungsstrom eine gleichbleibend gute Erwärmung. Bei veränderten Umweltbedingungen, gebrauchten oder verschmutzten Elektroden verändert sich auch bei einem konstanten Entladungsstrom die Erwärmung der Lichtwellenleiter, und damit die Qualität des Spleißes.

Aus DE 196 17 388 ist auf dem Gebiet der Materialbearbeitung von Werkstoffen mit Lasern ein Verfahren bekannt, die Temperaturverteilung in einem von einem Laser initiierten Plasma über Videosensoren auszuwerten. Das Plasma entspricht der Bogenentladung beim Spleißen, das Verfahren erlaubt aber keine Aussage darüber, wie die Temperaturverteilung im Lichtwellenleiter selbst und damit die Qualität des Spleißes ist.

Aus JP-A-02 028605 ist eine Vorrichtung zum Spleißen von Lichtwellenleitern bekannt, mittels welcher durch ein einfaches und geeignetes Anpassen einer elektrischen Entladung zwischen zwei Elektroden eine verlustarme Verbindung von Lichtwellenleitern herstellbar ist. Die Intensität und die Position der Entladung wird dadurch bestimmt, daß die Lichtausstrahlung zum Zeitpunkt des Spleißens der Enden der Lichtwellenleiter mittels eines optischen Bilderfassungssystems und eines Bildverarbeitungssystems bestimmt wird. Die Intensität und der Ort der Entladung relativ zu den Enden der zu verspleißenden Lichtwellenleitern können somit an die optimalem Bedingungen angepaßt werden.

Es ist die Aufgabe der Erfindung, die Temperatur für mehrere aufeinanderfolgende Spleißvorgänge automatisiert zu regeln, so daß die Spleißvorgänge mit hoher Genauigkeit zügig durchgeführt werden können.

Die Aufgabe wird gelöst durch ein Verfahren der eingangs genannten Art mit den kennzeichnenden Merkmalen des Patentanspruchs 1.

Dazu wird bei einem voreingestellten Entladungsstrom die Bogenentladung gezündet, eine ortsaufgelöste Ist-Intensitätsverteilung der dabei an den zu verspleißenden Lichtwellenleitern auftretenden Glühemission gemessen und mit einer ortsaufgelösten Referenz-Intensitätsverteilung verglichen. Im Falle einer Abweichung wird der Entladungsstrom so nachgeregelt, daß sich die Ist-Intensitätsverteilung der Referenz-Intensitätsverteilung annähert und der nachgeregelte Entladungsstrom wird als voreingestellter Entladungsstrom für folgende Spleißvorgänge abgespeichert.

Nach Patentanspruch 2 werden die dabei ermittelten Grauwerte über die Fläche der beiden Lichtwellenleiter gemittelt und nur dieser mittlere Grauwert der Ist-Intensitätsverteilung mit einem mittleren Referenz-Grauwert verglichen. Dadurch wird in vorteilhafter Weise die Menge der abzuspeichernden Daten reduziert.

Die Erfindung wird in Ausführungsbeispielen anhand der Figuren der Zeichnung näher erläutert. Dabei zeigen
Figur 1 einen schematischen Aufbau einer Spleißvorrichtung zum erfindungsgemäßen Spleißen von Lichtwellenleitern,
Figur 2a schematisch die Intensitätsverteilung über die Längsachse der beiden Lichtwellenleiter bei einer ersten Temperaturverteilung und
Figur 2b schematisch die Intensitätsverteilung über die Längsachse der beiden Lichtwellenleiter bei einer zweiten Temperaturverteilung.

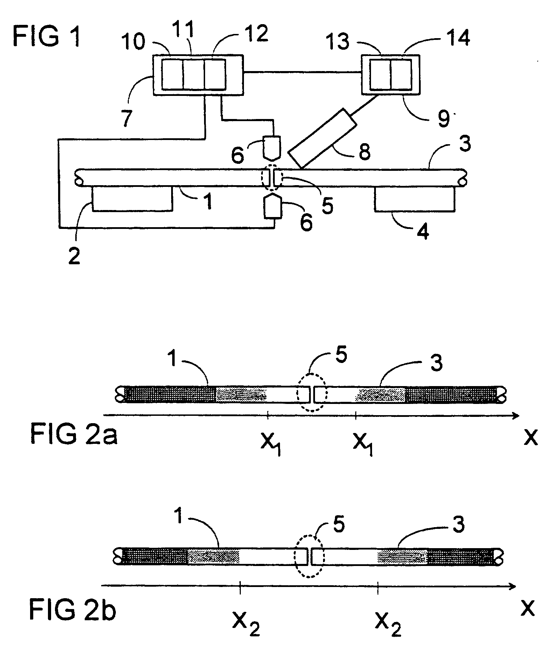

Gemäß Figur 1 wird zum Verspleißen das Ende eines ersten Lichtwellenleiters 1 auf einer ersten Haltevorrichtung 2 befestigt. Ein zweiter Lichtwellenleiter 3 wird auf einer zweiten Haltevorrichtung 4 befestigt. Die Haltevorrichtungen 2,4 dienen auch als Justiereinrichtungen, mit denen die beiden Enden der Lichtwellenleiter 1, 3 zueinander auf minimalen Versatz justiert werden, damit ein möglichst geringer zusätzlicher optischer Verlust an der Übergangsstelle (Spleißstelle) vom ersten Lichtwellenleiter 1 auf den zweiten Lichtwellenleiter 3 auftritt. Die beiden Enden der Lichtwellenleiter 1, 3 werden durch die Zündung eines Lichtbogens 5 zwischen zwei Elektroden 6 miteinander verschweißt. Die beiden Elektroden 6 werden dabei durch eine Steuer- und Regeleinrichtung 7, die eine Stromquelle 10 und einen zugeordneten Sollwertgeber 11 umfaßt, mit einem vorgegebenen Entladungsstrom beaufschlagt.

Erfindungsgemäß wird der Bereich des Lichtbogens 5 mit den Enden der Lichtwellenleiter 1,3 durch einen Sensor 8, beispielsweise eine Videokamera, aufgenommen und in einer nachgeschalteten Bildauswerteeinheit 9 ausgewertet. Die Bildauswerteeinheit 9 umfaßt dabei eine Speichereinrichtung 13 zum Abspeichern einer Referenz-Intensitätsverteilung und eine Vergleichseinrichtung 14 zum Vergleichen der Ist-Intensitätsverteilung mit der Referenz-Intensitätsverteilung. In Abhängigkeit des Vergleichs wird eine Regeleinrichtung 12 angesteuert, die ihrerseits den Entladungsstrom über den der Stromquelle 10 zugeordneten Sollwertgeber 11 so regelt, daß sich die Ist-Intensitätsverteilung der Referenz-Intensitätsverteilung zumindest annähert. Natürlich wird eine möglichst große Annäherung angestrebt, um eine reproduzierbare Qualität der Spleiße zu erhalten.

In vorteilhafter Weise läßt sich der Sensor 8 mit der nachgeschalteten Bildauswerteeinheit 9 auch für die Justage der Lichtwellenleiter verwenden, womit ein gegenüber einer Vorrichtung mit zwei Sensoren vereinfachter Aufbau der Spleißvorrichtung erzielt wird.

Eine automatische Verstärkungsregelung des Sensors 8 muß bei der Anwendung des Verfahrens ausgeschaltet sein, damit die Änderung der Intensität gemessen werden kann. Wird der Versatz der beiden Lichtwellenleiter zueinander durch in die Lichtwellenleiter eingekoppeltes Licht gemessen, so muß während des Spleißvorgangs dieses eingekoppelte Licht abgeschaltet werden, damit es die zu messende Intensitätsverteilung nicht beeinflußt.

Die Referenz-Intensitätsverteilung ist beispielsweise im Rahmen einer "Trainingsphase" ermittelt worden, bei der mit verschiedenen Entladungsströmen erzielte verschiedene Intensitätsverteilungen abgespeichert werden, die Qualität der daraus resultierenden Spleiße untersucht wird und anschließend die Intensitätsverteilung für den Spleiß mit den geringsten Verlusten als Referenz-Intensitätsverteilung und der dazugehörige Entladungsstrom als voreingestellter Entladungsstrom abgespeichert werden.

Beim Anlegen des voreingestellten Entladungsstroms beginnen die Enden der Lichtwellenleiter im Bereich des Lichtbogens 5 bereich zu glühen und damit im sichtbaren Bereich des Spektrums Licht zu emittieren. Die Temperaturverteilung in den Lichtwellenleitern wird ein Maximum im Bereich des Lichtbogens 5 aufweisen und in den Lichtwellenleitern 1, 3 mit größerer Entfernung vom Lichtbogen 5 abnehmen. Die Helligkeit der ausgestrahlten Glühemission wird mit größerer Entfernung zum Lichtbogen 5 ebenfalls abnehmen.

Bei veränderten Umgebungsparametern wird sich beim voreingestellten Entladungsstrom eine Ist-Intensitätsverteilung ergeben, die von der Referenz-Intensitätsverteilung abweicht. Der Entladungsstrom wird mit Hilfe der Regeleinrichtung 12 der Steuer- und Regeleinrichtung 7 solange verändert, bis sich die Ist-Intensitätsverteilung der Referenz-Intensitätsverteilung zumindest annähert. Bei gleicher Intensitätsverteilung liegen dann gleiche Temperaturverteilungen vor, so daß ein Spleiß mit den vorher bestimmten optimalen minimalen Verlusten erzielt wird.

Bei Verwendung einer Farbkamera können die Intensitätsverteilungen wellenlängenaufgelöst abgespeichert werden, was eine besonders genaue Regelung des Entladungsstroms erlaubt.

Besonders ökonomisch in bezug auf die abzuspeichernde Datenmenge sind zwei Verfahren, die mit einer Schwarzweiß-Kamera auskommen. In der Schwarzweiß-Kameras als Sensor 8 werden den Intensitätsverteilungen Grauwerte zugeordnet.

Im ersten Verfahren werden die Grauwerte dabei über das gesamte Fenster der Schwarzweiß-Kamera als Sensor 8 gemittelt, und nur der mittlere Grauwert der Referenz-Intensitätsverteilung in der Speichereinrichtung 13 der Bildauswerteeinheit 9 abgespeichert werden. Bei einer höheren Temperatur als vorgesehen wird ein höherer mittlerer Grauwert der Ist-Intensitätsverteilung gemessen und dadurch wird der Entladungsstrom entsprechend nachgeregelt.

Ein zweites Verfahren mit Grauwerten ist in den Figuren 2a und 2b dargestellt. Dabei wird eine Referenz-Position x1, bei der ein vorgegebener Grauwert, hier dargestellt vom Übergang weiß in hellgrau, als Referenz-Intensitätsverteilung abgespeichert. Verändert sich die Temperatur bei weiteren Spleißvorgängen im Beispiel zu höheren Temperaturen, so wird die Position mit dem vorgegebenen Grauwert nun nach Figur 2b an einer Ist-Position x2 auftreten. Durch eine Regelung des Entladungsstroms und daraus folgend ein Verschieben der Ist-Position x2 in Richtung der Referenz-Position x1 wird in diesem Fall die ursprüngliche Temperaturverteilung erreicht.

Es können auch zeitliche Abfolgen von Intensitätsverteilungen aufgenommen und abgespeichert werden und dann während der Spleißvorgänge miteinander verglichen werden. Die zeitliche Abfolge der Aufnahmen wird dabei durch das Einschalten des Entladungsstroms getriggert.

Somit ergibt sich eine von Umgebungsparametern unabhängige automatisierte Regelung auf eine gleichmäßige Temperaturverteilung beim Spleißen von Lichtwellenleitern.

## Patentansprüche

1. Verfahren zum Spleißen von Lichtwellenleitern (1,3) durch eine durch einen Entladungsstrom gesteuerte Bogenentladung zwischen zwei Elektroden, wobei
bei einem voreingestellten Entladungsstrom die Bogenentladung gezündet wird,
eine ortsaufgelöste Ist-Intensitätsverteilung der dabei an den Lichtwellenleitern auftretenden Glühemission gemessen und
mit einer ortsaufgelösten Referenz-Intensitätsverteilung verglichen wird,
im Fall einer Abweichung der Entladungsstrom so nachgeregelt wird, daß sich die Ist-Intensitätsverteilung der Referenz-Intensitätsverteilung annähert,
**dadurch gekennzeichnet,**
**daß** der nachgeregelte Entladungsstrom als voreingestellter Entladungsstrom für folgende Spleißvorgänge abgespeichert wird.

2. Verfahren zum Spleißen von Lichtwellenleitern (1,3) nach Anspruch 1,
**dadurch gekennzeichnet,**
**daß** die Grauwerte über die Abbildung der beiden Lichtwellenleiter (1,3) gemittelt werden und der mittlere Grauwert der Referenz-Intensitätsverteilung abgespeichert und mit den mittleren Grauwerten der Ist-Intensitätsverteilung verglichen wird und
**daß** im Fall einer Abweichung der Entladungsstrom so geregelt wird, daß sich der mittlere Grauwert der Ist-Intensitätsverteilung an den mittleren Grauwert der Referenz-Intensitätsverteilung zumindest annähert.

## Claims

1. Method for splicing optical conductors (1, 3) using an arc discharge between two electrodes which is controlled by a discharge current, in which the arc discharge is struck in the case of a preset discharge current, a spatially resolved actual intensity distribution of the thermonic emission occurring in the process at the optical conductors is measured and compared with a spatially resolved reference intensity distribution, in the case of a deviation the discharge current is corrected such that the actual intensity distribution approaches the reference intensity distribution, **characterized in that** the corrected discharge current is stored as preset discharge current for following splicing operations.

2. Method for splicing optical conductors (1, 3) according to Claim 1,
**characterized in that** the grey-scale values are averaged over the image of the two optical conductors (1, 3), and the mean grey-scale value of the reference intensity distribution is stored and compared with the mean grey-scale values of the actual intensity distribution, and **in that** in the case of a deviation the discharge current is controlled such that the mean grey-scale value of the actual intensity distribution at least approaches the mean grey-scale value of the reference intensity distribution.

## Revendications

1. Procédé d'épissage de guides d'ondes lumineuses (1, 3) par une décharge en arc commandée par un courant de décharge entre deux électrodes, dans lequel
en cas de courant de décharge préréglé, on amorce la décharge en arc,
on mesure une répartition d'intensité effective en résolution locale de l'émission thermoélectronique se produisant sur les guides d'ondes lumineuses et on la compare avec une répartition d'intensité de référence en résolution locale,
en cas d'écart, on ajuste le courant de décharge de façon à ce que la répartition d'intensité effective se rapproche de la répartition d'intensité de référence,
**caractérisé en ce que**
on enregistre le courant de décharge ajusté en tant que courant de décharge préréglé pour les opérations d'épissage suivantes.

2. Procédé d'épissage de guides d'ondes lumineuses (1, 3) selon la revendication 1,
**caractérisé en ce que**
on calcule la moyenne des valeurs de gris sur l'image des deux guides d'ondes lumineuses (1, 3) puis on enregistre la valeur de gris moyenne de la répartition d'intensité de référence et on la compare avec les valeurs de gris moyennes de la répartition d'intensité effective et
en cas d'écart, on ajuste le courant de décharge de façon à ce que la valeur de gris moyenne de la répartition d'intensité effective se rapproche au moins de la valeur de gris moyenne de la répartition d'intensité de référence.
